# EUROPEAN PATENT SPECIFICATION

(11) **EP 4 191 211 B1**
(45) Date of publication and mention of the grant of the patent: **01.04.2026**
(21) Application number: 21212596.7
(22) Date of filing: 06.12.2021
(51) Int. Cl.: G01F 23/284

(54) **MODULAR LEVEL MEASUREMENT SYSTEM**
MODULARES FÜLLSTANDMESSSYSTEM
SYSTÈME DE MESURE DE NIVEAU MODULAIRE

(43) Date of publication of application: 07.06.2023
(73) Proprietor: Rosemount Tank Radar AB, 435 23 Mölnlycke (SE)
(72) Inventor: PREISIG, Nicolas, Ödsmål (SE); WIDAHL, Christoffer, Västra Frölunda (SE)
(74) Representative: Kransell & Wennborg KB

(56) References cited:
- US-A1- 2009 243 863
- US-A1- 2018 149 474
- US-A1- 2018 156 652
- US-A1- 2018 356 512
- VEGA LEVEL AND PRESSURE: "Operating Instructions VEGASON 51K", 30 July 2014 (2014-07-30), XP093246502, Retrieved from the Internet <URL:https://www.vega.com/api/sitecore/DocumentDownload/Handler?documentContainerId=2283&languageId=2&fileExtension=pdf&softwareVersion=&documentGroupId=21758&version=04-03-2004> [retrieved on 20250204]

## Description

### Technical Field of the Invention

The present invention relates to a modular level measurement system, for measuring the level of a product in a tank, and to an inventory system.

### Technical Background

Traditionally, level measurement systems have been installed to measure the filling level of product in stationary, or marine vessel-integrated, tanks. In such storage tanks or process tanks, it is often necessary to measure the filling level with high precision, and each tank installation may present a unique measurement environment that the level measurement system needs to be adaptable to.

Recently, efforts have been made to also provide level measurement capabilities to IBC (intermediate bulk container) tanks and similar kinds of tanks that can be moved and are often only semi-stationary.

Compared to the above-mentioned storage tanks or process tanks, IBC tanks provide a simpler measurement situation, due to the relatively small dimensions and simple measurement environment. According to a known solution, a wireless level measurement system is fixed to a tank. The wireless level measurement system can be wirelessly configured to measure the filling level in the tank, and can wirelessly communicate the filling level to a remote receiver, which may be part of a centralized inventory system.

This solution allows a user, such as a chemical plant, to keep track of the status of the IBC tanks on its site, but may be too costly for widespread adoption. This may especially be the case as IBC tanks typically move between different locations, and are under the control of different "custodians" at different times.

There is therefore a need for a level measurement system suitable for use with IBC tanks, that provides for more cost-efficient inventory management of a population of IBC tanks.

US 2018/149474 A1 discloses an inventory management system including a sensor used to identify a level of a material in a tank, and a main control unit, which controls the overall operation of the system. The main control unit could be remotely located from the sensor.

### Summary

In view of the above, a general object of the present invention is to provide for improved, in particular more cost-efficient, inventory management of a population of IBC tanks or similar.

According to an aspect of the present invention, it is therefore provided a modular level measurement system as defined by claim 1.

The present invention is based on the realization that a common scenario for IBC tanks is that a given tank may spend relatively long periods during which there is no change in the status of the tank. Such periods may occur on a site or in transit between different sites. During such periods, there is no need for the full functionality of a complete wireless measurement system. For the purpose of keeping track of the status of each IBC tank in a population of IBC tanks, the present inventors have thus realized that it is sufficient to provide all tanks in the population with a reduced set of capabilities, and to provide selected tanks with a full set of capabilities when needed, such as when a change of the filling level in the tank is about to take place.

The modular level measurement system according to embodiments of the present invention allows data related to a status of the tank to be stored in a memory comprised in a first module that is fixed to the tank, and other functionality to be provided by a second module that may be detached from the tank when the full functionality of the level measurement system is not needed. Depending on the application, the first module can thus be made at a relatively low cost, allowing for each tank in a population to have the first module attached thereto. The number of second modules for a given population of tanks may be considerably smaller than the number of tanks in the population, and also considerably smaller than the number of first modules.

Hereby, the main portion of the investment in level measurement capabilities for IBC tanks may remain at a site, even if the tanks themselves, possibly including the first modules fixed to the tanks, leave for another site. Accordingly, embodiments of the modular level measurement system according to the present invention provide for more cost-efficient inventory management of a population of IBC tanks.

Furthermore, the provision of at least a memory and a communication interface in the first module and at least a communication interface in the second module, provides for simplified initialization and handling of the level measurement system.

The modular level measurement system may advantageously comprise processing circuitry for determining the level of the product based on the timing relation between the transmit signal and the reflection signal.

In summary, the present invention thus relates to a modular level measurement system, comprising: sensing circuitry for generating a transmit signal, transmitting the transmit signal, and receiving a reflection signal; processing circuitry for determining the level product based on a timing relation between the transmit signal and the reflection signal; wireless communication circuitry for wirelessly transmitting a signal indicative of the level of the product to a remote receiver; a memory for storing data related to a status of the tank, wherein the modular level measurement system comprises: a first module to be fixed to the tank, including at least the memory and a communication interface; and a second module including at least a communication interface, the second module being configured to be removably attached to the tank having the first module fixed thereto, in such a way that coupling is achieved between the communication interfaces of the first and second modules.

### Brief Description of the Drawings

These and other aspects of the present invention will now be described in more detail, with reference to the appended drawings showing a currently preferred embodiment of the invention, wherein:
Fig 1 is a schematic illustration of a use case for the modular level measurement system according to embodiments of the present invention;
Fig 2 schematically shows an exemplary tank with a level measurement system installed;
Figs 3A-B are schematic illustrations of the modular level measurement system according to the present invention;
Fig 4 is a schematic illustration of a first example embodiment of the modular level measurement system in figs 3A-B;
Fig 5 is a schematic illustration of a second example embodiment of the modular level measurement system in figs 3A-B;
Fig 6 schematically illustrates a first example installation of the modular level measurement system in figs 3A-B in a tank having a plastic wall;
Fig 7 schematically illustrates a second example installation of the modular level measurement system in figs 3A-B in a tank having a plastic wall;
Fig 8 is a flow-chart illustrating a first example of events following attachment to the tank of the second module of the modular level measurement system according embodiments of the invention;
Fig 9 is a flow-chart illustrating a second example of events following attachment to the tank of the second module of the modular level measurement system according embodiments of the invention;
Fig 10 is a flow-chart illustrating a first example of events following detachment from the tank of the second module of the modular level measurement system according embodiments of the invention; and
Fig 11 is a flow-chart illustrating a second example of events following detachment from the tank of the second module of the modular level measurement system according embodiments of the invention.

### Detailed Description of Example Embodiments of the Invention

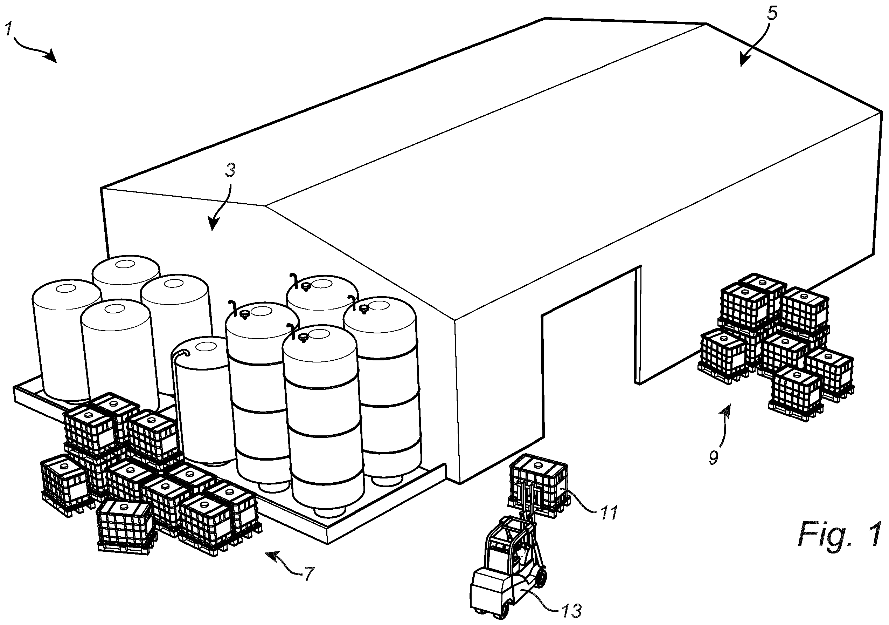

Fig 1 schematically shows an exemplary factory 1. As is schematically shown in fig 1, the factory 1 includes stationary processing and/or storage tanks 3, a factory building 5, a first outdoor storage facility 7 for incoming goods, and a second outdoor storage facility 9 for outgoing goods. At the first 7 and second 9 outdoor storage facilities, so-called IBC-tanks 11 (Intermediate Bulk Container) are shown, and an IBC-tank 11 is also shown to be in transit between the first outdoor storage facility 7 and the factory building 5 by means of a forklift 13.

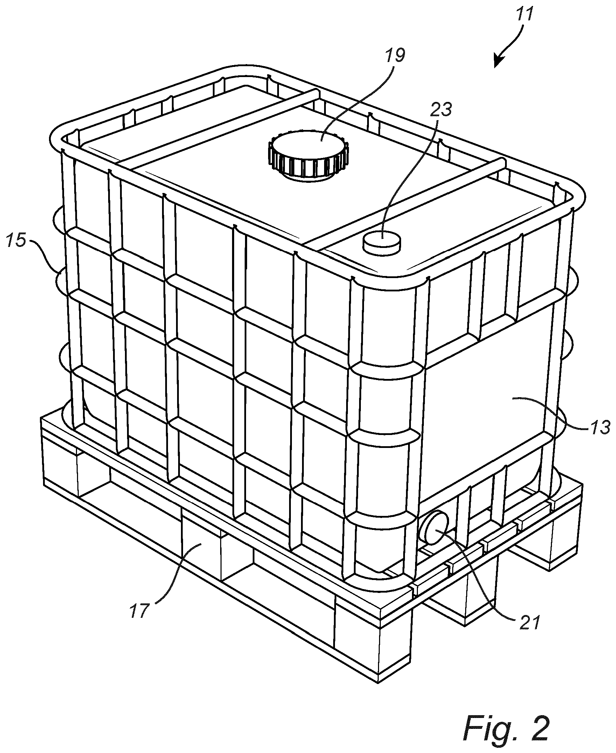

Fig 2 schematically shows an exemplary tank with a level measurement system installed. Referring to fig 2, the IBC-tank 11 comprises a plastic container 13, a metal cage 15, and a pallet 17. The plastic container 13 is provided with a top opening 19 for filling product and a bottom opening 21 for emptying product. As is schematically illustrated in fig 2, the IBC-tank 11 is further provided with a level measurement system 23 that is attached to the IBC-tank 11 for measuring the level of product in the tank through the wall of the plastic container 13.

It is common for various industries, such as the factory 1 in fig 1, to use IBC-tanks 11 for receiving, handling, and shipping raw material, intermediate product and/or finished product. As was mentioned in the Background section, systems for measuring the level of product in IBC-tanks 11 are known. The exemplary factory 1 in fig 1 provides an illustration of some of the drawbacks of the known systems, which are typically complete level measurement systems that are attached to the IBC-tanks 11 in various ways. When incoming IBC-tanks are delivered to the first outdoor storage facility 7, they may typically not be provided with a level measurement system, or at least not with a type of level measurement system supported by the inventory management system that is in use at the factory 1. Each of the incoming IBC-tanks 11 would then need to be provided with a level measurement system 23, that would remain on the IBC-tank 11 while the IBC-tank 11 is at the factory. This would require the factory 1 to have a large number of level measurement systems 23, that would typically have a low utilization, as the status of IBC-tanks 11 may remain unchanged for long periods of time. Alternatively, IBC-tanks 11 shipped to the factory 1 would need to be supplied already with mounted measurement systems 23 that have followed the IBC during transport. One way to reduce the investment in level measurement systems 23 could be to only attach a level measurement system 23 to an IBC-tank 11 when it is desired to find out the current level of product in the tank. Using existing level measurement systems 23, this would, however, require substantial manual intervention, since a level measurement system 23 would need to be manually initialized and calibrated each time it is attached to a new tank. These and other problems are addressed by the modular level measurement system according to embodiments of the present invention.

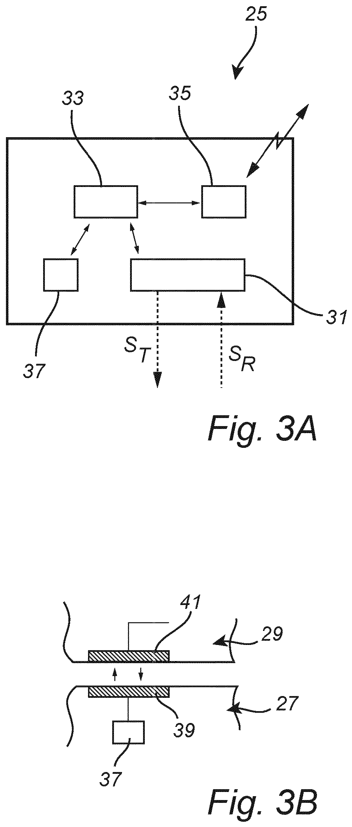

Figs 3A-B are schematic illustrations of the modular level measurement system according to the present invention. Fig 3A is a schematic functional illustration of the modular level measurement system 25, and fig 3B schematically illustrates the interface between the first module 27 and the second module 29 of the modular level measurement system 25.

Referring to figs 3A-B, the modular level measurement system 25 according to the present invention comprises sensing circuitry 31, processing circuitry 33, wireless communication circuitry 35, and a memory 37. The first module 27 includes at least the memory 37 and a communication interface 39 of the first module 27, and the second module 29 includes at least a communication interface 41 of the second module 29. The other functional parts of the modular level measurement system 25 are distributed between the first module 27 and the second module 29 in distributions that may vary depending on embodiment and application. Various embodiments of the modular level measurement system 25 of the invention may comprise additional functional parts, as will be exemplified in greater detail further below.

The sensing circuitry 31 is configured to generate a transmit signal S_{T}, transmit the transmit signal S_{T} towards a surface of the product in the tank 11, and receive a reflection signal S_{R} resulting from reflection of the transmit signal S_{T} at the surface of the product.

The processing circuitry 33 is coupled to the sensing circuitry 31, and is configured to determine the level of the product in the tank 11 based on a timing relation between the transmit signal S_{T} and the reflection signal S_{R}.

The wireless communication circuitry 35 is coupled to the processing circuitry 33, and is configured to wirelessly transmit a signal indicative of the level of the product in the tank 11 to a remote receiver. The remote receiver may, for example, be part of an inventory management system at the factory 1.

The memory 37, which may advantageously be a non-volatile memory, is configured to store data related to a status of the tank 11. The status of the tank 11 may, for example, include properties of the tank 11, such as dimensions of the tank, location of the tank 11, the latest known filling level, type of product in the tank 11, etc.

The first module 27 is arranged and configured to be fixed to the tank 11, and the second module 29 is configured to be removably attached to the tank 11 having the first module 27 fixed thereto, in such a way that the communication interface 41 of the second module 29 couples with the communication interface 39 of the first module 27, to allow signal exchange between the first module 27 and the second module 29.

It should be understood that the transmit signal S_{T} may be any kind of signal allowing contactless measurement of the level of product in the tank 11. Accordingly, the transmit signal S_{T} may be in the form of electromagnetic waves, such as a microwaves or light waves, etc, or mechanical waves, such as ultrasonic waves, etc. Various techniques for level measurement in tanks based on the timing relation between a transmit signal S_{T} and a reflection signal S_{R} are, per se, well known to the skilled person in the field of level measurement. It would therefore be superfluous to describe examples of such techniques herein.

The wireless communication circuitry 35 may be configured to wirelessly communicate with the above-mentioned remote receiver (and/or remote transmitter) using any suitable wireless communication protocol, such as wi-fi, zigbee, Bluetooth, etc.

The first module 27 can be fixed to an outer surface of a wall of the tank 11 (typically at the top of the tank 11 as is schematically shown in fig 2), if the wall of the tank 11 allows passage of the transmit signal S_{T} through the wall, or at least through a portion of the wall. Such a fixation of the first module 27 to the outer surface of the wall may, for instance, be achieved using a suitable adhesive or a suction device etc. Alternatively, the first module 27 may be integrated in the wall of the tank 11. According to a further alternative, the second module may be arranged in an opening through the wall of the tank 11. This may, for example, be the case when the wall of the tank 11 is made of metal and the transmit signal is an electromagnetic signal, such a microwave signal or an optical signal.

The communication interface 39 of the first module 27 and the communication interface 41 of the second module 29 may be configured to couple with each other using contactless coupling (for example NFC or Bluetooth Low Energy), or utilizing direct electrical contact (conductive contact) between conductive pins and/or pads etc. The coupling between the communication interface 39 of the first module 27 and the communication interface 41 of the second module 29 may allow signal exchange only or may additionally provide transfer of supply power from one of the modules to the other.

The requirements for the second module 27 to be configured to be removably attached to the tank 11 in such a way that the communication interface 41 of the second module 29 couples to the communication interface 39 of the first module 27, depend on the kind of coupling used. For a contactless coupling, it may be sufficient for the second module 29 to be attachable sufficiently close to the first module 27 to achieve wireless signal transfer and/or supply power transfer, similar to the relation between a contactless card and a card reader. For a coupling relying on conductive coupling, there will of course need to be physical contact between corresponding contact structures. In case of using Bluetooth Low Energy (BLE) or any other protocol that allows for a longer range than that of NFC for the communication interfaces 39 and 41, it may be advantageous to provide the modular level measurement system 25 with a coupling indicator that can indicate when a physical coupling between the first module 27 and the second module 29 has been established. Such a coupling indicator may be realized in various ways, such as using a structural or magnetic actuator.

There are various ways of attaching the second module 29 to the tank 11. The second module 29 may be attached to the first module 27 by any suitable attachment arrangement, using, for example, mechanical or magnetic attachment. Alternatively, the second module 29 may be attached directly to the tank 11, or to a fixture attached to the tank 11. In the case of an IBC-tank 11, the second module 29 could, for example, be attached to the cage 15 using a clamping arrangement.

In addition to the functional units described above, the modular level measurement system according to embodiments of the present invention may advantageously comprise a local energy store, such as one or more batteries, which may preferably be rechargeable.

Through the modular configuration of the level measurement system 25 according to the present invention, with the memory being included in the first module 27 that is, at least when in use, fixed to the tank 11, the tank 11 can contain information about the status of the tank 11 even when the second module 29 has been detached from the tank 11.

This enables automatic configuration and initiation of the modular level measurement system 25 upon attachment of the second module 29 to the tank 11. In other words, no user intervention in addition to attachment of the second module 29 to the tank 11 may be needed to make the modular level measurement system 25 fully operational. This will save time and reduce the risk of human error affecting production at the factory 1.

Furthermore, the second module 29 can receive information wirelessly from an inventory management system at the factory 1. The inventory management system may define and communicate rules or information about the various data stored in the first modules 27 of the tanks 11 at the factory 1. Hereby, the first module 27 can, via rules provided by the inventory system to the second module 29, in essence control the operational mode of the second module 29. For example, depending upon the situation of a particular tank 11, the second module 29 may or may not receive instructions to initiate a level measurement operation.

Following a level measurement operation by the modular level measurement system 25, the status of the tank 11 can be updated by storing data in the memory 37 in the first module 27 indicative of the measured level of product in the tank. This updated status of the tank 11 will then remain with the tank 11 even after detachment and removal of the second module 29 of the modular level measurement system 25 from the tank 11.

As mentioned above, the functional units comprised in the modular level measurement system 25 according to the present invention can be distributed between the first module 27 and the second module 29 in different ways depending on embodiment and application.

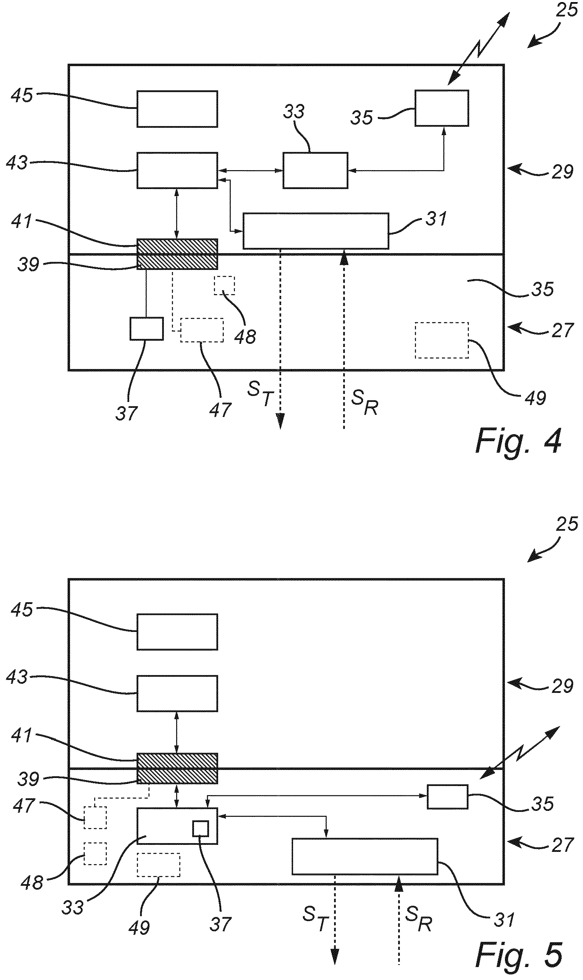

A first example embodiment of the modular level measurement system 25, with a first example distribution of functional units, will now be described with reference to fig 4. In this embodiment, the second module comprises operation control circuitry 43 for controlling operation of the modular level measurement system 25.

In fig 4, the operation control circuitry 43 is schematically indicated by a separate functional block. It should, however, be noted that various functional blocks of the modular level measurement system 25 may be realized by the same circuitry or component. For instance, the processing circuitry 33 for determining the level and the operation control circuitry 43 may be implemented using a single processor, such as an ASIC.

In the first example embodiment of fig 4, the second module 29 includes, in addition to the operation control circuitry 43, the sensing circuitry 31, the processing circuitry 33, the wireless communication circuitry 35, the communication interface 41 of the second module 29, and a battery 45 for providing supply power to at least the circuitry in the second module 29.

With continued reference to fig 4, the first module 27 includes the memory 37 and the communication interface 39 of the first module, and may optionally additionally include a wireless signal transmitter 47, and a local energy store 49, such as a battery, providing electrical energy to the wireless signal transmitter 47. The optional wireless signal transmitter 47 in the first module 27 may be controllable to transmit a signal for enabling location of the first module 27, and thus of the tank 11 to which the first module 27 is fixed. Hereby, the tank 11 can be tracked even after detachment and removal of the second module 29. In addition, the first module 27 may additionally include an accelerometer 48 configured to provide an indication when the tank 11, and thus the first module 27, is being moved. In embodiments, the communication interface 39 of the first module 27 may provide the functionality of the above-mentioned wireless signal transmitter 47. This is especially the case in embodiments where the communication interface 39 is capable of relatively long range wireless communication, for instance where the communication interface is realized using Bluetooth Low Energy or equivalent.

A second example embodiment of the modular level measurement system 25, with a second example distribution of functional units, will now be described with reference to fig 5. In this embodiment, the second module comprises the communication interface 41 of the second module 29, operation control circuitry 43 for controlling operation of the modular level measurement system 25, and a battery 45 for providing supply power to at least the circuitry in the second module 29.

With continued reference to fig 5, the first module 27 includes the memory 37 and the communication interface 39 of the first module, and additionally includes the sensing circuitry 31, the processing circuitry 33, and the wireless communication circuitry 35. As is schematically indicated in fig 5, the first module 27 may optionally additionally include a wireless signal transmitter 47, and a local energy store 49, such as a battery, providing electrical energy to the wireless signal transmitter 47. The optional wireless signal transmitter 47 in the first module 27 may be controllable to transmit a signal for enabling location of the first module 27, and thus of the tank 11 to which the first module 27 is fixed. Hereby, the tank 11 can be tracked even after detachment and removal of the second module 29. In addition, the first module 27 may additionally include an accelerometer 48 configured to provide an indication when the tank 11, and thus the first module 27, is being moved.

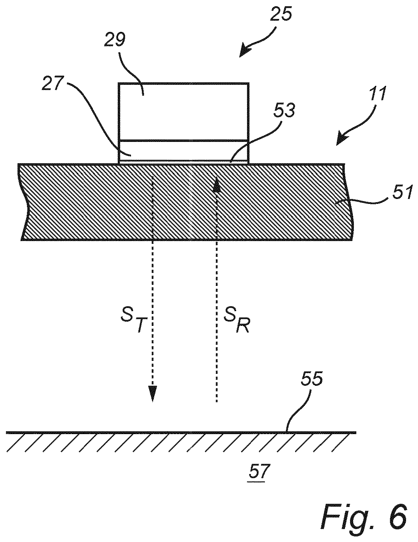

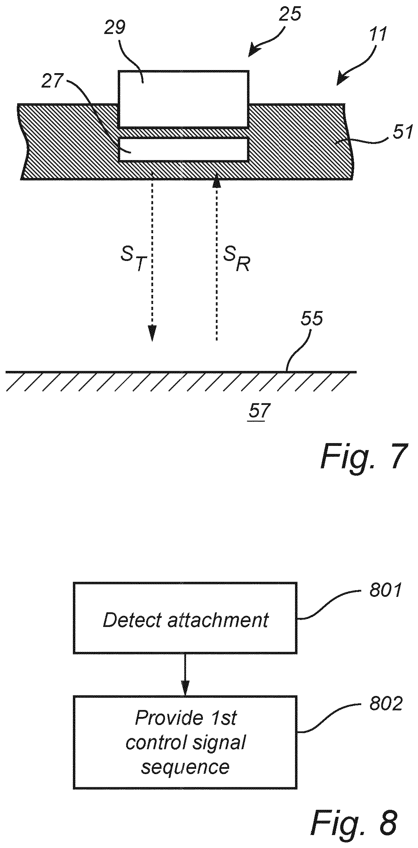

Fig 6 and fig 7 schematically illustrate two ways in which the first module 27 of the modular level measurement system 25 according to the present invention may be fixed to the tank 11.

Referring first to fig 6, a portion of a wall 51 of the tank 11 is shown, with the first module 27 of the modular level measurement system 25 attached thereto with an adhesive, such as an adhesive film 53. As is schematically indicated in fig 6, the transmit signal S_{T} passes through the adhesive film 53 and the tank wall 51 before it is reflected at the surface 55 of the product 57 in the tank 11. The reflection signal S_{R} resulting from reflection of the transmit signal S_{T} at the surface 55 returns towards the modular level measurement system 25.

In fig 7, the first module 27 is instead integrated inside the wall 51 of the tank 11, and the second module 29 is arranged in a recess formed in the wall 51.

Above, example configurations of various embodiments of the modular level measurement system 25 according to the present invention have been described, and some advantages associated with the modular approach have been introduced. In the following, more detail will be provided about the operation of the modular level measurement system 25, according to example embodiments.

Fig 8 is a flow-chart illustrating a first example of events following attachment to the tank 11 of the second module 29 of the modular level measurement system 25 according embodiments of the invention.

In a first step 801, the operation control circuitry 43 comprised in the second module 29 detects attachment of the second module 29 to the tank 11, in such a way that the communication interface 41 of the second module 29 couples with the communication interface 39 of the first module 27. Such detection may be achieved in various ways. For instance, the second module 29 may be provided with a sensor or switch configured to detect appropriate positioning of the second module 29 in relation to the first module 27. Such a sensor or switch may, for example, be mechanically, electrically, or magnetically actuated when the second module is arranged in such a way that the communication interface 41 of the second module 29 couples with the communication interface 39 of the first module 27. It will be straight-forward to the skilled person to provide for suitable detection of proper attachment of the second module 29 to the tank 11. For instance, referring to the schematic illustrations in fig 3B, fig 4 and fig 5, the communication interfaces 39 and 41 may be provided with a mechanical and/or magnetic guiding structure and a sensor or switch configured to be actuated by the mechanical and/or magnetic guiding structure.

In step 802, the operation control circuitry 43 in the second module 29 provides a first control signal sequence for controlling operation of the modular level measurement system 25 in response to detection of attachment of the second module 29 to the tank 11.

The first control sequence may advantageously include a control signal for acquisition of data stored in the memory 37 of the first module 27, and control signals for controlling the modular level measurement system 25 using the data acquired from the memory 37 of the first module 27. The data may encode various information about the tank 11, such as a tank identifier, tank dimensions, and/or electrical or mechanical properties of the tank 11. The data may also or alternatively encode information about the content of the tank 11, such as the density of the product in the tank, in order to allow an approximation of the weight of the tank 11.

For instance, the modular level measurement system 25 may be initiated and/or calibrated using the data acquired from the memory 37. Furthermore, the modular level measurement system 25 may be controlled to an operational state that depends on the data acquired from the memory 37. For example, the modular level measurement system 25 may automatically be controlled to wirelessly transmit, using the wireless communication circuitry 35, information encoded by the data acquired from the memory 37.

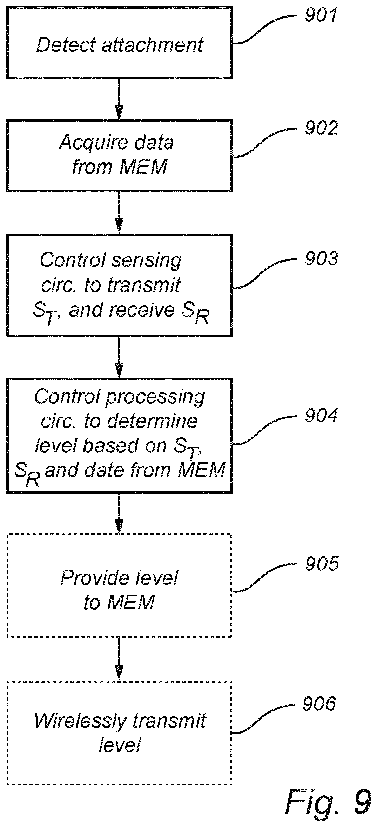

Fig 9 is a flow-chart illustrating a second example of events following attachment to the tank 11 of the second module 29 of the modular level measurement system 25 according embodiments of the invention.

In a first step 901, the operation control circuitry 43 comprised in the second module 29 detects attachment of the second module 29 to the tank 11, in such a way that the communication interface 41 of the second module 29 couples with the communication interface 39 of the first module 27, as described above.

In the subsequent step 902, the operation control circuitry 43 provides a control signal for acquisition of data stored in the memory 37 of the first module 27.

Thereafter, in step 903, the operation control circuitry 43 provides a control signal to the sensing circuitry 31 to transmit a transmit signal S_{T} towards the surface 55 of the product 57 in the tank 11, and to receive a reflection signal S_{R} resulting from reflection of the transmit signal S_{T} at the surface 55.

In step 904, the operation control circuitry 43 provides a control signal to the processing circuitry 33 to determine the level 55 of the product 57 in the tank 11 based on a timing relation between the transmit signal S_{T} and the reflection signal S_{R}, and further based on the data acquired from the memory 37 of the first module 27. Such data may, as was mentioned above, for instance encode relevant dimensions of the tank 11, for example a height of the tank 11.

The operation control circuitry 43 may further provide, in the optional further step 905, a control signal to the processing circuitry 33 to control the processing circuitry 33 to provide a signal indicative of the determined level of the product 57 in the tank 11 to the memory 37 in the first module 27.

In the optional step 906, the operation control circuitry 43 may control the processing circuitry 33 to wirelessly transmit a signal indicative of the determined level of the product 57 in the tank 11, via the wireless communication circuitry 35, to a remote receiver, which may be part of an inventory system for the factory 1.

According to various embodiments, the second module 29 may be configured to transmit time stamp signals to the first module 27, while the communication interface 41 of the second module 29 couples with the communication interface 39 of the first module 27; and the first module 27 may be configured to store at least the latest received time stamp signal as data in the memory 37 of the first module 27. The time stamp signals may be transmitted regularly or irregularly. The latest time stamp signal may be associated with the latest determined filling level, so that a time and an associated filling level may be stored in the memory 37 of the first module 27 also following detachment of the first module 27 from the second module 29.

Upon attachment of the second module 29 (which may be different from the previously detached second module) to the first module 27, the control signals for controlling the modular level measurement system 25 using the data acquired from the memory of the first module 27 may then optionally include control signals to compare, if the memory 37 of the first module 27 contains data indicative of a previously determined level of product in the tank 11 associated with a stored previously received time stamp signal, the current level of the product in the tank 11 with the previously determined level of product in the tank; and control, if a difference between the current level and the previously determined level is greater than a predefined threshold, the wireless communication circuitry 35 to wirelessly transmit a signal indicative thereof to the remote receiver. Based on this signal, an inventory system including the modular level measurement system(s) 25 at the factory 1 may determine an appropriate status of the tank 11. For instance, the tank 11 may be flagged for manual status check before being allowed for use in production or shipment etc.

According to additional embodiments, the second module 29 may also wirelessly transmit, to the above-mentioned remote receiver, other data upon or after attachment to the first module 27. Furthermore, upon detecting attachment of the second module 29 to the tank 11, any subsequent wireless communication of data originating from the first module 27 may take place via circuitry in the second module 29. This will minimize the energy consumption of circuitry in the first module 27, which may increase the life of optional battery or other local energy store in the first module 27.

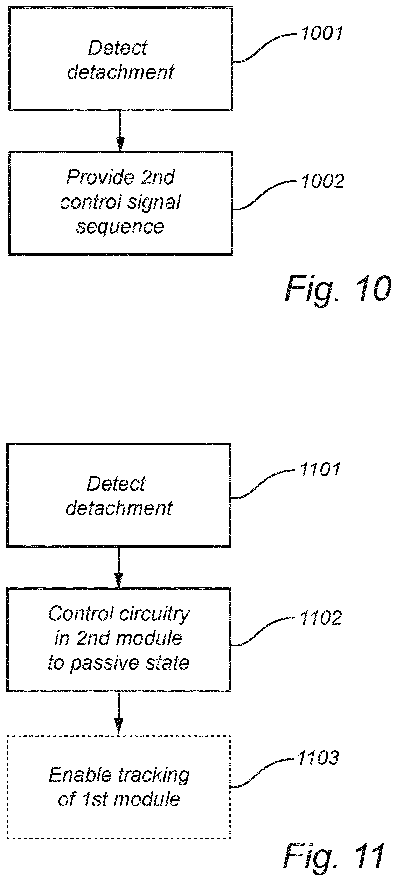

Fig 10 is a flow-chart illustrating a first example of events following detachment from the tank 11 of the second module 29 of the modular level measurement system 25 according embodiments of the invention.

In a first step 1001, the operation control circuitry 43 comprised in the second module 29 detects detachment of the second module 29 from the tank 11. Such detection may be achieved in various ways in analogy with what is described above for detection of attachment in connection with step 801 of fig 8.

In step 1002, the operation control circuitry 43 in the second module 29 provides a second control signal sequence for controlling operation of the modular level measurement system 25 in response to detection of detachment of the second module 29 from the tank 11.

Fig 11 is a flow-chart illustrating a second example of events following detachment from the tank 11 of the second module 29 of the modular level measurement system 25 according embodiments of the invention.

In a first step 1101, the operation control circuitry 43 comprised in the second module 29 detects detachment of the second module 29 from the tank 11.

In the subsequent step 1102, the operation control circuitry 43 provides a control signal for controlling circuitry comprised in the second module 29 to transition from an active state to a passive state. For instance, some or all of the functional units comprised in the second module 29 may be transitioned to an energy-saving sleep state. This may be especially important if the second module operates on a radar principle as certain industry requirements would not allow for an openly transmitting radar transmitter.

In the optional step 1103, which may be carried out in embodiments where the first module 27 includes the wireless signal transmitter 47 indicated as optional in fig 4 and fig 5, the wireless signal transmitter 47 may, following detachment of the second module 29 from the tank 11, transmit a signal for enabling location of the first module 27 (and thus of the tank 11). The wireless signal transmitter 47 may, for example, be a Bluetooth transmitter, powered by a battery 49 that may optionally be included in the first module 27. To enable location of the tank 11 in an energy-efficient manner, the wireless signal transmitter 47, which may for example be a BLE module, may broadcast a location signal. When the location signal has been picked up by, for example, a BLE gateway and the wireless signal transmitter 47 has picked up a response signal from the BLE gateway, the thus determined location can be stored in the memory 37 of the first module 27 and/or in a centralized database of the inventory management system. The first module 27, in particular the wireless signal transmitter 47 can be controlled to a low-power state, and stop broadcasting the location signal or start to broadcast the location signal with a lower transmission power.

According to embodiments, the first module 27 may additionally include an accelerometer 48, and the wireless signal transmitter 47 may be configured to start to transmit the signal for enabling location of the first module 27 only following an indication by the accelerometer 48 of movement of the first module 27.

The person skilled in the art realizes that the present invention by no means is limited to the preferred embodiments described above. On the contrary, many modifications and variations are possible within the scope of the appended claims.

## Claims

1. A modular level measurement system (25), for measuring the level of a product (57) in a tank (11), comprising:
sensing circuitry (31) for generating a transmit signal (S_{T}), transmitting the transmit signal towards a surface (55) of the product (57) in the tank, and receiving a reflection signal (S_{R}) resulting from reflection of the transmit signal (S_{T}) at the surface of the product, to allow determination of the level of the product based on a timing relation between the transmit signal and the reflection signal;
wireless communication circuitry (35) for wirelessly transmitting a signal indicative of the level of the product to a remote receiver;
a memory (37) for storing data related to a status of the tank (11),
wherein the modular level measurement system (25) comprises:
a first module (27) to be fixed to the tank (11), the first module (27) including at least the memory (37) and a communication interface (39) of the first module (27); and
a second module (29) including at least a communication interface (41) of the second module (29), wherein the second module (29) comprises operation control circuitry (43) for controlling operation of the modular level measurement system (25),
**characterized in** the second module (29) being configured to be removably attached to the tank (11) having the first module (27) fixed thereto or to the first module (27), in such a way that coupling is achieved between the communication interface (41) of the second module (29) and the communication interface (39) of the first module (27), to allow signal exchange between the first module (27) and the second module (29),
wherein the operation control circuitry (43) is configured to provide a first control signal sequence for controlling operation of the modular level measurement system (25) in response to detection of attachment of the second module (29) to the tank, or to the first module (27), wherein the first control signal sequence includes:
a control signal for acquisition of data stored in the memory (37) of the first module (27); and
control signals for initiating and/or calibrating the modular level measurement system (25) using the data acquired from the memory (37) of the first module (27).

2. The modular level measurement system (25) according to claim 1, wherein:
the modular level measurement system (25) further comprises processing circuitry (33) for determining the level of the product (57) based on a timing relation between the transmit signal (S_{T}) and the reflection signal (S_{R}); and
the control signals for controlling the modular level measurement system (25) using the data acquired from the memory (37) of the first module (27) includes control signals to:
control the sensing circuitry (31) to transmit a transmit signal (S_{T}) towards the surface (55) of the product (57) in the tank (11), and receive a reflection signal (S_{R}) resulting from reflection of the transmit signal (S_{T}) at the surface (55) of the product (57); and
control the processing circuitry (33) to determine a current level of the product (57) in the tank (11) based on a timing relation between the transmit signal (S_{T}) and the reflection signal (S_{R}), and based on the data acquired from the memory (37) of the first module (27).

3. The modular level measurement system (25) according to claim 2, wherein the operational control circuitry (43) is further configured to:
control the processing circuitry (33) to provide, to the memory (37) in the first module (27), a signal indicative of the current level of the product (57) in the tank (11).

4. The modular level measurement system (25) according to claim 2 or 3, wherein:
the second module (29) is configured to transmit time stamp signals to the first module (27), while the communication interface (41) of the second module (29) couples with the communication interface (39) of the first module (27);
the first module (27) is configured to store at least the latest received time stamp signal as data in the memory (37) of the first module (27); and
the control signals for controlling the modular level measurement system (25) using the data acquired from the memory (37) of the first module (27) includes control signals to:
compare, if the memory (37) of the first module (27) contains data indicative of a previously determined level of product (57) in the tank (11) associated with a stored previously received time stamp signal, the current level of the product (57) in the tank (11) with the previously determined level of product (57) in the tank (11); and
control, if a difference between the current level and the previously determined level is greater than a predefined threshold, the wireless communication circuitry (35) to wirelessly transmit a signal indicative thereof to the remote receiver.

5. The modular level measurement system (25) according to any one of the preceding claims, wherein:
the operation control circuitry (43) in the second module (29) is configured to provide a second control signal sequence for controlling operation of the modular level measurement system (25) in response to detection of detachment of the second module (29) from the tank (11), or from the first module (27).

6. The modular level measurement system (25) according to claim 5, wherein the second control signal sequence includes a control signal for controlling circuitry comprised in the second module (29) to transition from an active state to a passive state, in response to the sensed detachment of the second module (29) from the tank (11), or from the first module (27).

7. The modular level measurement system (25) according to claim 5 or 6, wherein, the first module (27) comprises a wireless signal transmitter (47), and a local energy store (49) providing electrical energy to the wireless signal transmitter (47), the wireless signal transmitter (47) being configured to transmit a signal for enabling location of the first module (27) following detachment of the second module (29) from the tank (11), or from the first module (27).

8. The modular level measurement system (25) according to claim 7, wherein:
the first module (27) comprises an accelerometer (48); and
the wireless signal transmitter (47) included in the first module (27) is configured to transmit the signal for enabling location of the first module (27) following an indication by the accelerometer (48) of movement of the first module (27).

9. The modular level measurement system (25) according to any one of the preceding claims, wherein the second module (29) comprises:
the wireless communication circuitry (35) for wirelessly transmitting the signal indicative of the level of the product (57) to a remote receiver; and
a local energy store (45) for providing electrical energy to the circuitry in the second module (29).

10. The modular level measurement system (25) according to claim 9, wherein the second module (29) further comprises:
the sensing circuitry (31); and
the processing circuitry (33).

11. The modular level measurement system (25) according to any one of the preceding claims, comprising an attachment arrangement for attaching the second module (29) to the tank (11), or to the first module (27), in such a way that the communication interface (41) of the second module (29) couples with the communication interface (39) of the first module (27).

12. The modular level measurement system (25) according to claim 11, wherein the attachment arrangement comprises:
a first part comprised in the first module; and
a second part comprised in the second module.

13. An inventory system (1) comprising:
a plurality of modular level measurement systems (25) according to any one of the preceding claims;
a remote receiver configured to receive wireless signals from the level measurement systems (25); and
an inventory database coupled to the remote receiver for storing information encoded by the received wireless signals.

## Patentansprüche

1. Modulares Füllstandsmesssystem (25) zum Messen des Füllstands eines Produkts (57) in einem Tank (11), umfassend:
eine Erfassungsschaltungsanordnung (31) zum Erzeugen eines Sendesignals (S_{T}), Senden des Sendesignals in Richtung einer Oberfläche (55) des Produkts (57) in dem Tank und Empfangen eines Reflexionssignals (S_{R}), das sich aus einer Reflexion des Sendesignals (S_{T}) an der Oberfläche des Produkts ergibt, um eine Bestimmung des Füllstands des Produkts basierend auf einer zeitlichen Beziehung zwischen dem Sendesignal und dem Reflexionssignal zu ermöglichen;
eine Drahtloskommunikations-Schaltungsanordnung (35) zum drahtlosen Senden eines Signals, das den Füllstand des Produkts angibt, an einen entfernten Empfänger;
einen Speicher (37) zum Speichern von Daten, die einen Status des Tanks (11) betreffen,
wobei das modulare Füllstandsmesssystem (25) umfasst:
ein erstes Modul (27), das an dem Tank (11) zu befestigen ist, wobei das erste Modul (27) mindestens den Speicher (37) und eine Kommunikationsschnittstelle (39) des ersten Moduls (27) aufweist; und
ein zweites Modul (29), das mindestens eine Kommunikationsschnittstelle (41) des zweiten Moduls (29) aufweist,
wobei das zweite Modul (29) eine Betriebssteuerschaltungsanordnung (43) zum Steuern eines Betriebs des modularen Füllstandsmesssystems (25) umfasst,
**dadurch gekennzeichnet, dass** das zweite Modul (29) eingerichtet ist, um abnehmbar an dem Tank (11), an dem das erste Modul (27) befestigt ist, oder an dem ersten Modul (27) derart angebracht zu sein, dass eine Kopplung zwischen der Kommunikationsschnittstelle (41) des zweiten Moduls (29) und der Kommunikationsschnittstelle (39) des ersten Moduls (27) hergestellt wird, um einen Signalaustausch zwischen dem ersten Modul (27) und dem zweiten Modul (29) zu ermöglichen,
wobei die Betriebssteuerschaltungsanordnung (43) eingerichtet ist, um eine erste Steuersignalsequenz zum Steuern eines Betriebs des modularen Füllstandsmesssystems (25) als Reaktion auf eine Erfassung einer Anbringung des zweiten Moduls (29) an dem Tank oder an dem ersten Modul (27) bereitzustellen, wobei die erste Steuersignalsequenz aufweist:
ein Steuersignal zur Abrufung von Daten, die in dem Speicher (37) des ersten Moduls (27) gespeichert sind; und
Steuersignale zum Starten und/oder Kalibrieren des modularen Füllstandsmesssystems (25) unter Verwendung der Daten, die aus dem Speicher (37) des ersten Moduls (27) abgerufen wurden.

2. Modulares Füllstandmesssystem (25) nach Anspruch 1, wobei:
das modulare Füllstandsmesssystem (25) ferner eine Verarbeitungsschaltungsanordnung (33) zum Bestimmen des Füllstands des Produkts (57) basierend auf einer zeitlichen Beziehung zwischen dem Sendesignal (S_{T}) und dem Reflexionssignal (S_{R}) umfasst; und
die Steuersignale zum Steuern des modularen Füllstandsmesssystems (25) unter Verwendung der Daten, die aus dem Speicher (37) des ersten Moduls (27) abgerufen werden, Steuersignale umfassen zum:
Steuern der Erfassungsschaltungsanordnung (31), um ein Sendesignal (S_{T}) in Richtung der Oberfläche (55) des Produkts (57) in dem Tank (11) zu senden und ein Reflexionssignal (S_{R}) zu empfangen, das sich aus einer Reflexion des Sendesignals (S_{T}) an der Oberfläche (55) des Produkts (57) ergibt; und
Steuern der Verarbeitungsschaltungsanordnung (33), um einen aktuellen Füllstand des Produkts (57) in dem Tank (11) basierend auf einer zeitlichen Beziehung zwischen dem Sendesignal (S_{T}) und dem Reflexionssignal (S_{R}) und basierend auf den Daten, die aus dem Speicher (37) des ersten Moduls (27) abgerufen werden, zu bestimmen.

3. Modulares Füllstandmesssystem (25) nach Anspruch 2, wobei die Betriebssteuerschaltungsanordnung (43) ferner eingerichtet ist zum:
Steuern der Verarbeitungsschaltungsanordnung (33), um dem Speicher (37) in dem ersten Modul (27) ein Signal bereitzustellen, das den aktuellen Füllstand des Produkts (57) in dem Tank (11) angibt.

4. Modulares Füllstandmesssystem (25) nach Anspruch 2 oder 3, wobei:
das zweite Modul (29) eingerichtet ist, um Zeitstempelsignale an das erste Modul (27) zu senden, während die Kommunikationsschnittstelle (41) des zweiten Moduls (29) mit der Kommunikationsschnittstelle (39) des ersten Moduls (27) gekoppelt ist;
das erste Modul (27) eingerichtet ist, um mindestens das zuletzt empfangene Zeitstempelsignal als Daten in dem Speicher (37) des ersten Moduls (27) zu speichern; und
die Steuersignale zum Steuern des modularen Füllstandsmesssystems (25) unter Verwendung der Daten, die aus dem Speicher (37) des ersten Moduls (27) abgerufen werden, Steuersignale umfassen zum:
Vergleichen, wenn der Speicher (37) des ersten Moduls (27) Daten enthält, die einen zuvor bestimmten Füllstand des Produkts (57) in dem Tank (11) in Verbindung mit einem gespeicherten, zuvor empfangenen Zeitstempelsignal angeben, des aktuellen Füllstands des Produkts (57) in dem Tank (11) mit dem zuvor bestimmten Füllstand des Produkts (57) in dem Tank (11); und
Steuern, wenn eine Differenz zwischen dem aktuellen Füllstand und dem zuvor bestimmten Füllstand größer als ein vordefinierter Schwellenwert ist, der Drahtloskommunikations-Schaltungsanordnung (35), um ein Signal, das dies angibt, drahtlos an den entfernten Empfänger zu senden.

5. Modulares Füllstandsmesssystem (25) nach einem der vorhergehenden Ansprüche, wobei:
die Betriebssteuerschaltungsanordnung (43) in dem zweiten Modul (29) eingerichtet ist, um eine zweite Steuersignalsequenz zum Steuern eines Betriebs des modularen Füllstandsmesssystems (25) als Reaktion auf eine Erfassung einer Entfernung des zweiten Moduls (29) von dem Tank (11) oder von dem ersten Modul (27) bereitzustellen.

6. Modulares Füllstandsmesssystem (25) nach Anspruch 5, wobei die zweite Steuersignalsequenz ein Steuersignal zum Steuern einer Schaltungsanordnung aufweist, die in dem zweiten Modul (29) enthalten ist, um als Reaktion auf die erfasste Entfernung des zweiten Moduls (29) von dem Tank (11) oder von dem ersten Modul (27) von einem aktiven Zustand in einen passiven Zustand überzugehen.

7. Modulares Füllstandsmesssystem (25) nach Anspruch 5 oder 6, wobei das erste Modul (27) einen Drahtlossignalsender (47) und einen lokalen Energiespeicher (49) umfasst, der dem Drahtlossignalsender (47) elektrische Energie bereitstellt, wobei der Drahtlossignalsender (47) eingerichtet ist, um ein Signal zum Ermöglichen einer Ortung des ersten Moduls (27) nach der Entfernung des zweiten Moduls (29) von dem Tank (11) oder von dem ersten Modul (27) zu senden.

8. Modulares Füllstandmesssystem (25) nach Anspruch 7, wobei:
das erste Modul (27) einen Beschleunigungsmesser (48) umfasst; und
der Drahtlossignalsender (47), der in dem ersten Modul (27) enthalten aufweist, eingerichtet ist, um das Signal zum Ermöglichen einer Ortung des ersten Moduls (27) nach einer Angabe durch den Beschleunigungsmesser (48) einer Bewegung des ersten Moduls (27) zu senden.

9. Modulares Füllstandsmesssystem (25) nach einem der vorhergehenden Ansprüche, wobei das zweite Modul (29) umfasst:
die Drahtloskommunikations-Schaltungsanordnung (35) zum drahtlosen Senden des Signals, das den Füllstand des Produkts (57) angibt, an einen entfernten Empfänger; und
einen lokalen Energiespeicher (45) zum Bereitstellen elektrischer Energie an die Schaltungsanordnung in dem zweiten Modul (29).

10. Modulares Füllstandsmesssystem (25) nach Anspruch 9,
wobei das zweite Modul (29) ferner umfasst:
die Erfassungsschaltungsanordnung (31); und
die Verarbeitungsschaltungsanordnung (33).

11. Modulares Füllstandsmesssystem (25) nach einem der vorhergehenden Ansprüche, umfassend eine Anbringungsanordnung zum Anbringen des zweiten Moduls (29) an dem Tank (11) oder an dem ersten Modul (27) in einer derartigen Weise, dass die Kommunikationsschnittstelle (41) des zweiten Moduls (29) mit der Kommunikationsschnittstelle (39) des ersten Moduls (27) gekoppelt ist.

12. Modulares Füllstandmesssystem (25) nach Anspruch 11, wobei die Anbringungsanordnung umfasst:
einen ersten Teil, der in dem ersten Modul enthalten ist; und
einen zweiten Teil, der in dem zweiten Modul enthalten ist.

13. Inventarsystem (1), umfassend:
mehrere modulare Füllstandsmesssysteme (25) nach einem der vorhergehenden Ansprüche;
einen entfernten Empfänger, der eingerichtet ist, um Drahtlossignale von dem Füllstandsmesssystem (25) zu empfangen; und
eine Inventar-Datenbank, die mit dem entfernten Empfänger gekoppelt ist, um Informationen zu speichern, die durch die empfangenen Drahtlossignale kodiert sind.

## Revendications

1. Système de mesure de niveau modulaire (25) destiné à mesurer le niveau d'un produit (57) dans un réservoir (11), comprenant :
un circuit de détection (31) destiné à générer un signal de transmission (S_{T}), à transmettre le signal de transmission vers une surface (55) du produit (57) dans le réservoir, et à recevoir un signal de réflexion (S_{R}) résultant de la réflexion du signal de transmission (S_{T}) à la surface du produit, pour permettre la détermination du niveau du produit sur la base d'une relation de synchronisation entre le signal de transmission et le signal de réflexion ;
un circuit de communication sans fil (35) destiné à transmettre sans fil un signal indiquant le niveau du produit à un récepteur distant ;
une mémoire (37) destinée à stocker des données relatives à un état du réservoir (11),
dans lequel le système de mesure de niveau modulaire (25) comprend :
un premier module (27) destiné à être fixé au réservoir (11), le premier module (27) incluant au moins la mémoire (37) et une interface de communication (39) du premier module (27) ; et
un deuxième module (29) incluant au moins une interface de communication (41) du deuxième module (29),
dans lequel le deuxième module (29) comprend un circuit de commande de fonctionnement (43) destiné à commander le fonctionnement du système de mesure de niveau modulaire (25),
**caractérisé en ce que** le deuxième module (29) est configuré pour être raccordé de façon amovible au réservoir (11) comportant le premier module (27) fixé à celui-ci ou au premier module (27), de manière à obtenir un couplage entre l'interface de communication (41) du deuxième module (29) et l'interface de communication (39) du premier module (27), pour permettre un échange de signaux entre le premier module (27) et le deuxième module (29),
dans lequel le circuit de commande de fonctionnement (43) est configuré pour fournir une première séquence de signaux de commande destinée à commander le fonctionnement du système de mesure de niveau modulaire (25) en réponse à la détection du raccordement du deuxième module (29) au réservoir, ou au premier module (27), dans lequel la première séquence de signaux de commande inclut :
un signal de commande pour l'acquisition de données stockées dans la mémoire (37) du premier module (27) ; et
des signaux de commande pour l'initiation et/ou l'étalonnage du système de mesure de niveau modulaire (25) à l'aide des données acquises à partir de la mémoire (37) du premier module (27).

2. Système de mesure de niveau modulaire (25) selon la revendication 1, dans lequel :
le système de mesure de niveau modulaire (25) comprend en outre un circuit de traitement (33) destiné à déterminer le niveau du produit (57) sur la base d'une relation de synchronisation entre le signal de transmission (S_{T}) et le signal de réflexion (S_{R}) ; et
les signaux de commande destinés à commander le système de mesure de niveau modulaire (25) à l'aide des données acquises à partir de la mémoire (37) du premier module (27) incluent des signaux de commande destinés à :
commander le circuit de détection (31) pour transmettre un signal de transmission (S_{T}) vers la surface (55) du produit (57) dans le réservoir (11), et pour recevoir un signal de réflexion (S_{R}) résultant de la réflexion du signal de transmission (S_{T}) à la surface (55) du produit (57) ; et
commander le circuit de traitement (33) pour déterminer un niveau actuel du produit (57) dans le réservoir (11) sur la base d'une relation de synchronisation entre le signal de transmission (S_{T}) et le signal de réflexion (S_{R}), et sur la base des données acquises à partir de la mémoire (37) du premier module (27).

3. Système de mesure de niveau modulaire (25) selon la revendication 2, dans lequel le circuit de commande de fonctionnement (43) est en outre configuré pour :
commander le circuit de traitement (33) pour fournir, à la mémoire (37) dans le premier module (27), un signal indiquant le niveau actuel du produit (57) dans le réservoir (11).

4. Système de mesure de niveau modulaire (25) selon la revendication 2 ou 3, dans lequel :
le deuxième module (29) est configuré pour transmettre des signaux d'horodatage au premier module (27), tandis que l'interface de communication (41) du deuxième module (29) se couple à l'interface de communication (39) du premier module (27) ;
le premier module (27) est configuré pour stocker au moins le signal d'horodatage reçu en dernier, sous forme de données dans la mémoire (37) du premier module (27) ; et
les signaux de commande destinés à commander le système de mesure de niveau modulaire (25) à l'aide des données acquises à partir de la mémoire (37) du premier module (27) incluent des signaux de commande destinés à :
comparer, si la mémoire (37) du premier module (27) contient des données indiquant un niveau de produit (57) déterminé précédemment dans le réservoir (11), associé à un signal d'horodatage reçu précédemment, le niveau actuel du produit (57) dans le réservoir (11) avec un niveau de produit (57) déterminé précédemment dans le réservoir (11) ; et
commander, si une différence entre le niveau actuel et le niveau déterminé précédemment est supérieur à un seuil prédéfini, le circuit de communication sans fil (35) pour transmettre sans fil un signal indiquant celle-ci au récepteur distant.

5. Système de mesure de niveau modulaire (25) selon l'une quelconque des revendications précédentes, dans lequel :
le circuit de commande de fonctionnement (43) dans le deuxième module (29) est configuré pour fournir une deuxième séquence de signaux de commande destinée à commander le fonctionnement du système de mesure de niveau modulaire (25) en réponse à la détection du détachement du deuxième module (29) par rapport au réservoir (11), ou par rapport au premier module (27).

6. Système de mesure de niveau modulaire (25) selon la revendication 5, dans lequel la deuxième séquence de signaux de commande inclut un signal de commande destiné à commander un circuit compris dans le deuxième module (29) permettant de passer d'un état actif à un état passif, en réponse au détachement détecté du deuxième module (29) par rapport au réservoir (11), ou par rapport au premier module (27).

7. Système de mesure de niveau modulaire (25) selon la revendication 5 ou 6, dans lequel le premier module (27) comprend un émetteur de signaux sans fil (47) et un accumulateur d'énergie local (49) destiné à fournir de l'énergie électrique à l'émetteur de signaux sans fil (47), l'émetteur de signaux sans fil (47) étant configuré pour émettre un signal permettant la localisation du premier module (27) après le détachement du deuxième module (29) par rapport au réservoir (11), ou par rapport au premier module (27).

8. Système de mesure de niveau modulaire (25) selon la revendication 7, dans lequel :
le premier module (27) comprend un accéléromètre (48) ; et
l'émetteur de signaux sans fil (47) inclus dans le premier module (27) est configuré pour émettre le signal permettant la localisation du premier module (27) après une indication, par l'accéléromètre (48), du déplacement du premier module (27).

9. Système de mesure de niveau modulaire (25) selon l'une quelconque des revendications précédentes, dans lequel le deuxième module (29) comprend :
le circuit de communication sans fil (35) destiné à transmettre sans fil le signal indiquant le niveau du produit (57) à un récepteur distant ; et
un accumulateur d'énergie local (45) destiné à fournir de l'énergie électrique au circuit dans le deuxième module (29).

10. Système de mesure de niveau modulaire (25) selon la revendication 9,
dans lequel le deuxième module (29) comprend en outre :
le circuit de détection (31) ; et
le circuit de traitement (33).

11. Système de mesure de niveau modulaire (25) selon l'une quelconque des revendications précédentes, comprenant un ensemble de raccordement destiné à raccorder le deuxième module (29) au réservoir (11), ou au premier module (27), de manière à ce que l'interface de communication (41) du deuxième module (29) se couple à l'interface de communication (39) du premier module (27).

12. Système de mesure de niveau modulaire (25) selon la revendication 11, dans lequel l'ensemble de raccordement comprend :
une première partie comprise dans le premier module ; et
une deuxième partie comprise dans le deuxième module.

13. Système d'inventaire (1) comprenant :
une pluralité de systèmes de mesure de niveau modulaires (25) selon l'une quelconque des revendications précédentes ;
un récepteur distant configuré pour recevoir des signaux sans fil à partir des systèmes de mesure de niveau (25) ; et
une base de données d'inventaire couplée au récepteur distant pour stocker des informations encodées par les signaux sans fil reçus.
